# EUROPEAN PATENT APPLICATION

(11) **EP 0 762 442 A1**
(43) Date of publication of application: **12.03.1997**
(21) Application number: 96117219.4
(22) Date of filing: 13.10.1993
(51) Int. Cl.: H01F 7/16, F16K 31/06

(54) **Proportional solenoid**

(30) Priority: 15.10.1992 US 961567; 07.10.1993 US 133594
(62) Divisional of application: 94903428.4
(71) Applicant: PARKER HANNIFIN CORPORATION, Cleveland Ohio 44112 (US)
(72) Inventor: Campbell, Chester D., Rancho Santa Margarita, California 92688 (US); Harper, Sandra L., Dana Point, California 92629 (US); Jain, Virender, Lake Forest, California 92630 (US); Kenyon, Richard L., Irvine, California 92715 (US); Matthies, Alan, Milwaukee, WI 53216 (US); Riefler, Roger G., Brandon, MI 39042 (US); Yabuki, Roy M., Los Angeles, California 90029 (US); Zopey, Ashok, Anaheim Hills, California 92807 (US)
(74) Representative: Purvis, William Michael Cameron

(57) **Abstract**

A movable member of a control element is moved by a plunger (24) of a proportional solenoid (22). The proportional solenoid has a magnetic flux circuit including a low permeance isolation tube (62) surrounding the plunger, which enables removal of the coil (76) and frame (78) of the solenoid from the valve. The solenoid further includes a variable permeance flux washer (69) the flux through which varies with plunger position, which is disposed from a gap (82) which provides an area of magnetic saturation. The proportional solenoid produces force/displacement characteristics which enable precise control of the control element and accurate regulation of the refrigerant flow rate through the valve.

## Description

This invention relates to a proportional solenoid.

A proportional solenoid can be used in conjunction with an expansion valve for a heat transfer system such as a vehicle air conditioning system.

Heat transfer systems, such as air conditioning systems and heat pump systems, are well known in the prior art. In such systems a working fluid which can be any one of a number of refrigerant materials is used to transfer heat from one region to another.

The working fluid typically passes through a system that includes an evaporator, a compressor, a condenser and an expansion device. Of course the system may also include other components such as an accumulator or a receiver/dryer.

In an air conditioning application the evaporator is positioned in the space to be cooled and the condenser is positioned in the area to which heat removed from the cooled space is transferred. Working fluid in the vapor state is pumped by the compressor into the condenser. In the condenser the working fluid rejects heat and condenses to a liquid.

The liquid working fluid passes from the outlet of the condenser into an expansion device. Expansion devices known in the prior art include fixed orifices, capillary tubes and expansion valves.

From the expansion device the working fluid flows to the evaporator wherein it absorbs heat and undergoes a change of phase from liquid to vapor. The refrigerant vapor then flows back to the compressor to begin another pass through the system.

The expansion device is an important element of the system. The amount of working fluid that passes through the expansion device is a controlling factor in the amount of cooling that can be achieved. However, because the temperature of both the space being cooled and the space to which heat transferred often vary, the pressure and temperature of the liquid working fluid entering the expansion device also varies. This impacts the cooling capabilities of the system and affects the flow rate that must be attained through the expansion device to achieve the optimum cooling effect. In mobile systems such as those used as air conditioning or refrigeration systems on vehicles, the properties of the working fluid delivered to the expansion device can vary widely.

Due to the variable operating conditions of vehicle heat transfer systems, fixed opening expansion devices such as orifices and capillary tubes are sometimes used to reduce cost but are not preferred. Expansion valves that provide variable refrigerant flow rates are more desirable.

Prior art expansion valves have traditionally controlled flow by passing the fluid through an internal opening in the valve and employing a lovable restricting body or other element in close proximity to the opening. Moving the restricting body closer to the opening reduces flow. Conversely, moving the restricting body away from the opening increases flow through the valve.

In prior art expansion valves the position of the restricting body has been controlled by an actuator. A common actuator is a diaphragm type which is mounted on the valve. The actuator opens or closes flow through the expansion valve in response to fluid pressure both inside the valve and from a control source. The control source for fluid pressure for positioning the restricting body is delivered from a sealed bulb which holds a carefully determined fluid charge. The bulb is commonly mounted adjacent to the outlet line from the evaporator. When the temperature of the working fluid exiting the space to be cooled begins to increase, the temperature of the bulb also increases. As the pressure of the fluid inside the bulb increases it moves the diaphragm and the blocking body inside the expansion valve to increase the flow rate of working fluid to the evaporator. The increased flow of working fluid provides more cooling and eventually the temperature at the outlet of the evaporator drops. When this occurs the pressure inside the bulb falls, moving the diaphragm and the restricting body to reduce the flow rate of working fluid through the valve. The charge in the bulb is contrived to achieve a small amount of super-heat in the refrigerant leaving the evaporator.

A problem with this type of prior art actuator is that the expansion device is constantly seeking the optimum rate of flow. The response time renders the expansion device unable to react promptly to changing conditions. This is particularly a problem in vehicle applications where changes in cooling loads and variations in refrigerant properties are common. As a result, the accuracy of control is also less than optimum.

Others have previously used electrically controlled expansion valves to control the flow of working fluid in a heat transfer system. These systems typically use valves that are either fully open or fully closed. The valve is periodically opened and closed for controlled time periods to achieve an overall average flow rate that is designed to handle the heat transfer load at the evaporator.

A significant problem with such pulse width modulated expansion valves is that they must open and close very frequently. This causes rapid wear of the valve components. The opening and closing action also often causes "hammering" in the system. The vibration associated with hammering may cause fatigue and premature failure of the valve and the connected tubing. It also makes accurate pressure measurement impossible.

The control elements used in prior art expansion valves for controlling or regulating the flow of working fluid also have drawbacks. The valves that meter flow must be made to deal with the static and dynamic pressure effects created by the working fluid as it passes through the valve. In some designs efforts are made to use the pressure of the working fluid to develop balancing forces. These balancing forces enable more precise movement of the restricting body or other control element. This is intended to enable more precise control of the flow rate.

The problem with attempts to design expansion valves that use such balancing forces is that the forces vary substantially with the fluid conditions and the flow rate. As a result it has been difficult to produce an expansion valve that provides accurate control of fluid flow over a wide range of operating conditions.

According to one aspect of the invention there is provided a proportional solenoid comprising: a non-magnetic isolation member having a closed first end and an open second end; a magnetic plunger disposed in the isolation member, the plunger being longitudinally movable within the isolation member between said first and second ends; a magnetic frame means that supports a coil connectable to an electrical supply; the frame means supporting the coil on a magnetic sleeve; the frame means having an opening at one end to receive the isolation member so that the frame means and the coil can be removed from the isolation member and the plunger; flux saturation means disposed longitudinally between one end of the plunger and one end of the sleeve to provide an area of magnetic flux saturation through the plunger; and a variable permeance element disposed adjacent the flux saturation means and axially adjacent said one end of the plunger; the variable permeance element and the plunger coacting to produce an area of variable permeance in relation to the position of the plunger within the isolation member.

According to another aspect of the invention there is provided a proportional soldnoid having a magnetic plunger that longitudinally moves by force of a magnetic field produced by an electromagnetic coil so that the plunger moves in a direction of increasing permeance in relation to current in the coil, including a non-magnetic sleeve that surrounds the plunger to provide a separation between the plunger and magnetic elements of teh coil.

According to yet another embodiment of the invention there is provided a proportional soldnoid comprising: a non-magnetic isolation member having a closed first end and an open second end; a magnetic plunger disposed in the isolation member, the plunger being longitudinally movable within the isolation member between said first and second ends; a magnetic frame that supports a coil connectable to an electrical supply; the frame supporting the coil on a magnetic sleeve; the frame having an opening at one end thereof to receive the isolation member through said opening so that the frame and the coil can be removed from the isolation member and the plunger; a flux saturation element disposed longitudinally between one end of teh plunger and one end of the sleeve to provide an area of magnetic flux saturation through the plunger; and a variable permeance element disposed adjacent the flux saturation element and axially adjacent said one end of the plunger; the variable permeance element and the plunger coacting to produce an area of variable permeance in relation to the position of the plunger within the isolation member.

According to a still further embodiment of the invention there is provided a solenoid comprising:
an actuator member comprised of magnetic material;
an isolation member comprised of nonmagnetic material, the isolation member having an interior area, the actuator member being movable longitudinally in the interior area;
a sleeve member comprised of magnetic material in surrounding relation to the isolation member, and terminating at a longitudinal edge surface;
a variable permeance element longitudinally disposed from the edge surface of the sleeve member and including means for accepting the actuating member adjacent thereto in variable longitudinal position;
an electrical coil in generally surrounding relation to the sleeve member and having a first end and a second end; and a frame comprised of magnetic material supporting the coil, the frame extending adjacent the sleeve member at the first coil end and adjacent the variable permeance element at the second coil end.

Such a proportional solenoid actuator can accurately control flow through the control element and can achieve accurate positioning of the movable member of the control element in response to electrical signals delivered to the proportional solenoid actuator.

Accurately positioning the control element of the valve through movement of the proportional actuator, enables accurate flow control through the expansion valve and precise control of the cooling effects of the system in which the expansion valve is used.

The invention is diagrammatically illustrated by way of example in the accompanying drawings, in which:-
Figure 1 is a cross sectional view of an expansion valve controlled by a proportional solenoid according to the invention;
Figure 2 is a side view of a normally closed control element of the expansion valve shown in Figure 1;
Figure 3 is a cross sectional side view of the control element shown in Figure 2;
Figure 4 is a side view of a normally open control element of an alternative embodiment of expansion valve;
Figure 5 is a cross sectional view of the control element shown in Figure 4;
Figure 6 is a cross sectional view of the proportional solenoid actuator of the expansion valve shown in Figure 1; and
Figure 7 is a schematic view of a heat transfer system incorporating the expansion valve of Figure 1.

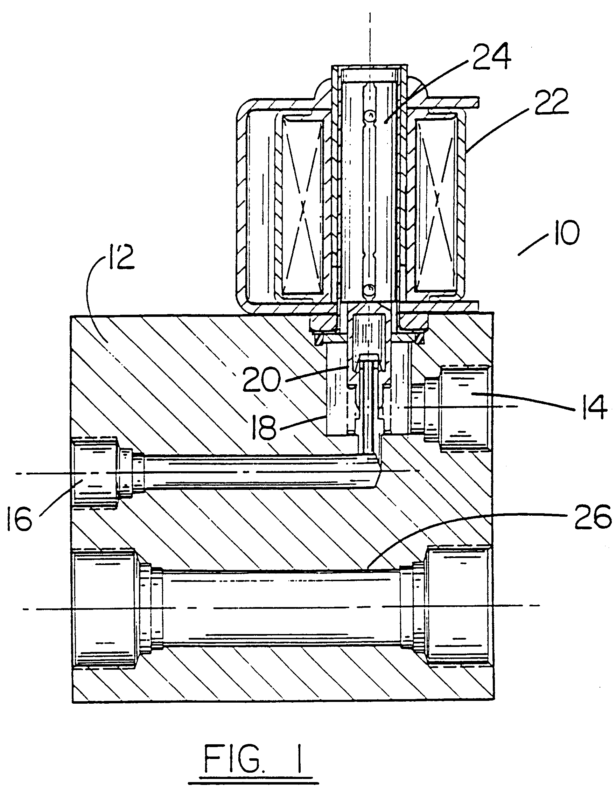

Referring now to the drawings and particularly to Figure 1, there is shown an expansion valve generally indicated 10. The valve has a body 12. The body 12 includes an inlet 16 for receiving liquid refrigerant working fluid. The valve also has an outlet 14 for delivering expanded working fluid to an evaporator or other exothermic heat exchanger. As later explained, the expansion valve may be operated with flow in either direction, so that the inlet and outlet connections may be reversed.

The body 12 further includes a chamber 18. A control element 20 is positioned in chamber 18. Fluid passing from inlet 16 to outlet 14 of the valve is required to pass through the control element.

Valve 10 further includes a proportional solenoid 22. Solenoid 22 includes a movable plunger element 24. Plunger element 24 is a low friction type plunger of the type described in Patent Specification US-A-5,252,939. As later described in detail, plunger element 24 is controlled to move downward in response to electrical signals supplied to the proportional solenoid 22.

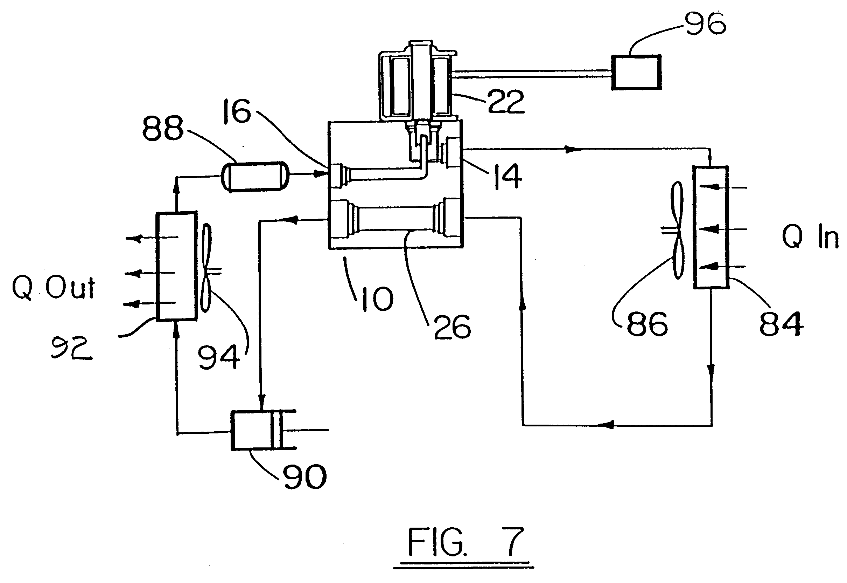

Body 12 of valve 10 further includes a return passage 26. Return passage 26 provides a path for working fluid from the evaporator as it returns to the compressor and the remainder of the system (see Figure 7). Return passage 26 provides a convenient location for sensors for detecting the character and properties of the refrigerant material leaving the evaporator. However, the expansion valve need not include a return passage through body 12.

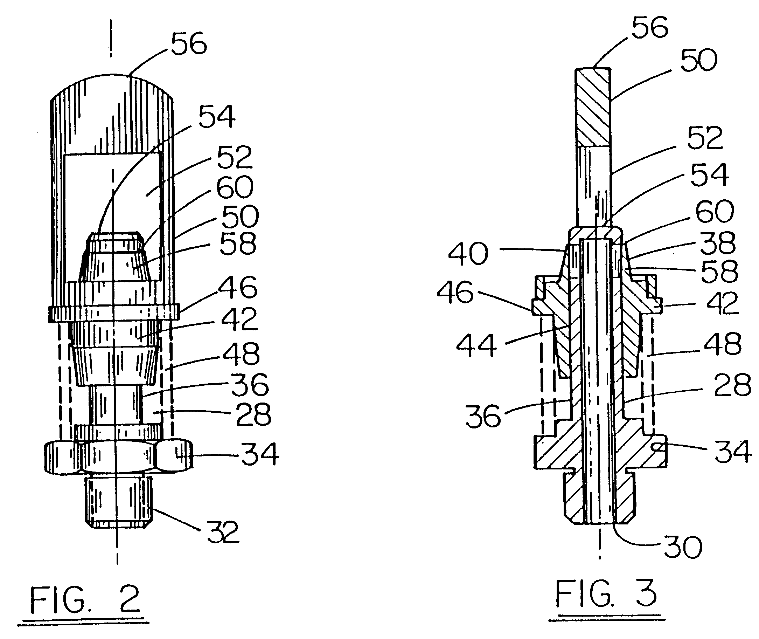

Control element 20 is shown in greater detail in Figures 2 and 3. Control element 20 has a stem member 28 that includes an internal passage 30. The stem member has a threaded lower portion 32 for attaching to a similarly threaded opening in body 12 (not separately shown) which is in fluid communication with outlet 16. The stem member 28 also has a hex area 34 to facilitate installation and removal of the control element from the valve.

Stem member 28 includes a cylindrical outer surface 36. A pair of opposed longitudinally elongated openings 38 extend on outer surface 36. Openings 38 are in fluid communication with internal passage 30 through ducts 40. Ducts 40 are similarly configured to openings 38. Control element 20 further includes a movable member 42. Movable member 42 has a cylindrical inner surface 44 that is slightly larger in diameter than outer surface 36 of stem member 28. As a result, movable member is axially movable on stem member 28.

Movable member 42 includes an enlarged flange area 46. Flange area 46 is in abutting relation at its lower side with a compression spring 48 as shown in Figures 2 and 3. Compression spring 48 biases the movable member upward as shown in the drawings.

The upper surface of flange area 46 supports a cap portion 50 of the movable member. Cap portion 50 includes a open area 52 that enables it to move downward on stem member 28 a significant distance without engaging a closed top area 54 of the stem member. Cap portion 50 also has a rounded plunger engaging portion 56. Plunger engaging portion 56 of movable member 42 engages plunger 24 as shown in Figure 1, as the movable member is biased against the plunger by spring 48.

Movable member 42 further includes tapered peripheral surface 58. Peripheral surface 58 is tapered as shown in Figures 2 and 3 such that it is relatively thin in the area of openings 38 and terminates in a sharp edge 60.

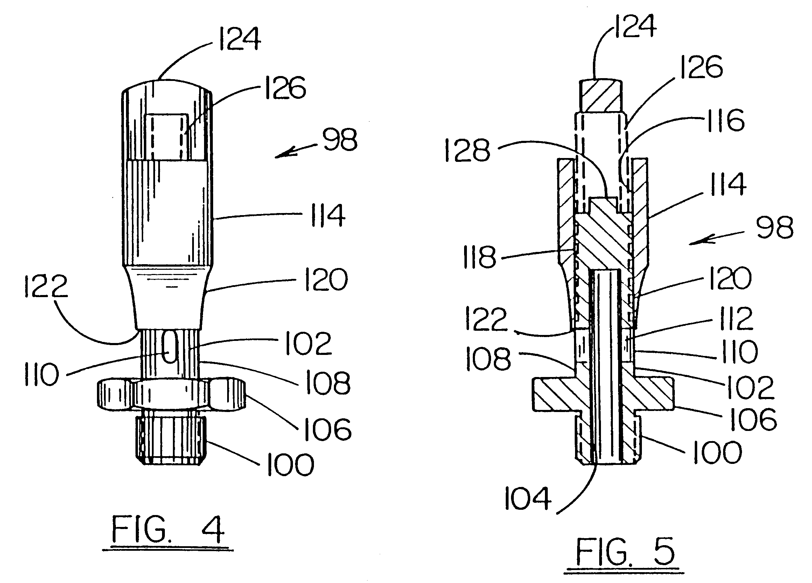

As shown in Figures 2 and 3, spring 48 biases movable member 42 upward, and the peripheral surface 58 of the movable member covers openings 38 in the outer surface of stem member 28 when no downward force is applied by the plunger of the actuator. As the control element is biased towards the position in which openings 38 are covered, it is a normally closed element. As discussed later in conjunction with the description of the embodiment of the control element shown in Figures 4 and 5, other embodiments of the expansion valve may have normally open control elements.

When movable member 42 is moved in a direction downward as shown in Figures 2 and 3, peripheral surface 58 and edge 60 move to uncover openings 38 in stem member 28. As a result, the area outside the control element in chamber 18 is in fluid communication with internal passage 30 of the control element, and outlet 14 of the valve, through ducts 40. The extent to which openings 38 are uncovered determines the flow rate of refrigerant material through the control element, and thus the flow rate of material passing from the inlet to the outlet of the expansion valve.

The tapered peripheral portion 58 and the sharp edge 60 of the control element are important for achieving accurate flow control through the expansion valve. The sharp edge minimizes the surface area of the movable member 42 that is directly exposed to the high velocity fluid stream passing out of the openings 38 in the stem. Minimizing such surface area eliminates the tendency for the fast moving fluid to exert forces on the movable member through momentum of the moving fluid or suction forces created in accordance with Bernoulli's Principles. The thin and tapered configuration of the peripheral surface further minimizes such forces by reducing the surface exposed to the high velocity flow. By minimizing variable flow induced forces, the movable member may be stably positioned longitudinally on the outside of the stem. This is a substantial improvement over control elements which have significant surface area exposed to the high velocity flow. The larger surfaces in prior art valves are subject to being acted upon by substantial fluid momentum and velocity induced suction forces, which make the control element difficult to hold in a desired position, and thus make it difficult to accurately control flow. Preferably forces applied by the moving fluid to the movable member are balanced out. This minimizes side loads and reduces frictional resistance to movement of the movable member on the stem. This further enables accurate flow control.

In the preferred embodiment the taper of the tapered portion is a maximum of about 15 degrees and the edge is less than about 0.0127 cm in thickness. The stem member 28 is preferably about 0.381 cm in diameter. In the preferred embodiment the movable member and stem member are made from non-magnetic stainless steel. As later explained, the non-magnetic character of the control element provides advantages in operation. In other embodiments other non-magnetic materials such as brass, ceramics or other materials having sufficient dimensional stability and rigidity to withstand the fluid forces without deformation and which provide wear resistance, may be used.

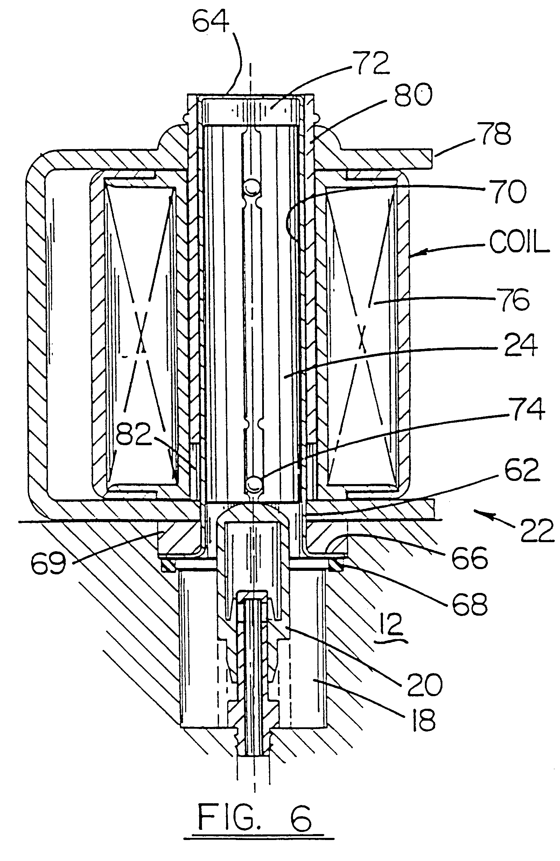

The proportional solenoid 22 is shown in greater detail in Figure 6. The proportional solenoid 22 includes an isolation tube 62. Isolation tube 62 is generally cylindrical and has a closed top 64. Isolation tube 64 also has a flanged bottom 66 which nests in a recess (not separately shown) in body 12. In the preferred form of the invention isolation tube 66 is made of non-magnetic stainless steel material having approximately 1.27 cm O.D. and a 0.0305 cm thick wall. The body 12 is preferably made of non-magnetic aluminum alloy.

A resilient seal 68 is positioned under flange bottom 66 of isolation tube 62. Seal 68 serves to provide a fluid tight seal which prevents the working fluid in chamber 18 from escaping around the isolation tube through the recess. The isolation tube is fixed in the position shown by fastening means (not shown). A flux washer 69 made of magnetic material is positioned in the recess above flange bottom 66 of the isolation tube. The preferred form of the flux washer is sized with an opening that accepts the isolation tube, has a 2.54 cm outside diameter and is 0.4572 cm thick. The purpose of flux washer 69 is later described in detail.

The isolation tube 62 has a cylindrical surface 70. Plunger 24 is movable inside an internal area 72 of the isolation tube. Internal area 72 is bounded by interior surface 70. As described in Patent Specification US-A-5,252,939, plunger 24 is comprised of magnetic material and non-magnetic rollable bodies 74 roll between the surface of plunger and the interior surface 70 of the isolation tube. Further, the isolation tube provides a radial gap in which there is no magnetic material between the plunger and the lower portion of the frame. This radial gap is approximately 0.508 cm. This construction enables plunger 24 to move with virtually no frictional resistance.

Proportional solenoid 22 further includes a wound wire coil 76 for providing an electromagnetic field when electrical power is supplied thereto. Coil 76 is supported in a frame 78 made of magnetic material that is u-shaped in cross section. A cylindrical sleeve 80 extends part way through the center of coil 76. A longitudinal gap 82 extends between the bottom of sleeve 80 and the lower portion of frame 78 as shown in Figure 6. In the preferred embodiment the length of this longitudinal gap is 0.762 cm.

The inside diameter of sleeve 80 is slightly larger than the outside diameter of isolation tube 62. In addition, in the preferred embodiment, frame 78 is releasably attached to body 12 of the valve. This enables the coil and frame assembly to be removed from the valve without releasing any of the refrigerant working fluid 20 from the system. This makes it easier to repair or replace the coil of the solenoid actuator.

In operation of the expansion valve, when no electrical power is applied to coil 76, the spring 48 of control element 20 biases plunger 24 upward to the position shown in Figures 1 and 6. Supplying power to coil 76 creates an electromagnetic field. The electromagnetic field produces a flux circuit about solenoid 22. The flux circuit extends through the sleeve 80, the frame 78 and the flux washer 69. However, gap 82 causes magnetic saturation in the area of the gap.

The magnetic plunger functions as a member for completing the magnetic flux circuit. Flux washer 69 serves as a variable permeance element as its permeance varies with the distance the plunger 24 is displaced downward. As electrical power delivered to the coil of the solenoid actuator increases, the magnetic saturation at the gap 82 also increases. This causes the plunger to move downward until the force reaches an equilibrium with the biasing force of the spring of the control element.

By varying the amount of power delivered to the coil of the proportional solenoid, the position of the plunger and the movable member 42 of the control element may be precisely controlled. Because the movable member is not subject to significant flow forces as a result of fluid flowing through the valve, the rate of flow of working fluid through the valve is predictably and accurately regulated.

The proportional solenoid of the present invention is novel in that unlike conventional solenoids the force it produces does not increase exponentially as the plunger approaches the end of its stroke. This enables the solenoid actuator to achieve a force versus stroke characteristic that enables precise and repeatable movement. This in combination with the element which minimizes forces from the flowing fluid provides a valve that provides flow control accuracy that was previously unattainable in expansion valves.

Solenoid 22 is further novel in that although it is a proportional solenoid, it is removable from the body of the valve. This facilitates repair or replacement. Prior art type proportional solenoids have not generally been used in expansion valves because they could not tolerate a low permeance structure between the coil sleeve and the plunger. In the present invention however, a low permeance non-magnetic isolation tube is positioned between the magnetic sleeve and the plunger element. The presence of this low permeance tube actually enhances the ability of the plunger to move. This is believed to occur because the low permeance element maintains the plunger away from other magnetic elements and reduces resistance to movement that occurs when a magnetic element that is attracted to the plunger is immediately adjacent thereto.

It will be understood by those skilled in the art, that although the preferred embodiment of the invention uses an air gap to achieve a saturation area, in other embodiments a non-magnetic spacer or thinned area of the sleeve may be used. Likewise, although the preferred embodiment includes a flux washer as a variable permeance element, other embodiments may use other types of elements that exhibit increasing permeance with plunger stroke.

In operation of the proportional solenoid, as greater electrical power is delivered to coil 76 plunger 24 moves in a downward direction as shown in Figure 1. Because movable member 42 is engaged with plunger 24, it likewise moves downward. This opens flow through openings 38 in the outer surface of the stem member 28. As a result, working fluid on the inside of the stem member flows into chamber 28 and expands. Because openings 38 are elongated, the further the movable member moves downward the greater the flow through the control element.

The configuration of the control element enables precise control of the flow therethrough in response to the displacement of the movable member. As previously discussed, the taper of peripheral surface 58 and sharp edge 60 of the movable member reduces to a minimum the area of the movable member exposed to the fast moving fluid. Forces tending to cause side forces on the movable member which are perpendicular to its direction of motion are balanced. As a result, the effects of flow and pressure are minimized.

The non-magnetic character and configuration of the flow control element provides a further advantage in the operation of the valve. It is common for magnetic particles to flow in the working fluid in the flow circuit. Such impurities may result from contamination or deterioration of system components. Such magnetic particles can become attached to the magnetic plunger and control elements comprised of magnetic material. By making the control element non-magnetic and engaging the plunger at plunger engaging portion 56, which is far removed from the flow openings 38, such particles do not tend to collect near the openings or relatively moving parts of the control element where they could otherwise restrict flow or cause wear. This further assures accurate control of flow and increases valve life. The configuration of the movable member with the plunger engaging surface far removed from the flow openings, provides an internal space that enables more uniform expansion within the body of the valve. This further helps to achieve uniformity of flow and accurate control.

The control element provides precise and predictable flow control in response to the power delivered to the proportional solenoid. As a result, the expansion valve of the present invention may be used to achieve more accurate control of the cooling characteristics when used in an air conditioning or other heat transfer system.

A typical system in which the expansion valve 10 of the present invention may be used is shown schematically in Figure 7. Liquid working fluid enters inlet 16 of the expansion valve. The expanded refrigerant leaves the outlet 14 and is delivered in a suitable conduit to an evaporator 84. The working fluid absorbs heat as indicated by the arrows labeled Q-in, as the working fluid flows through the evaporator. Of course in the preferred form of the invention, which is an air conditioning system for a vehicle, the evaporator is in the passenger compartment or other area to be cooled. A fan 86 shown schematically draws air through the evaporator to assist in heat transfer.

Working fluid exiting the evaporator travels in a suitable conduit back through return passage 26 of valve 10. As previously discussed, the return passage through the valve provides a suitable location for temperature and/or pressure sensors to detect the properties of the refrigerant vapor exiting the evaporator.

The vaporized working fluid is compressed by compressor 90 and delivered in a suitable conduit to a condenser 92. In condenser 92 the working fluid loses heat as reflected by the arrows labeled Q-out. In the condenser 92 the working fluid condenses to a liquid. A fan 94 shown schematically draws air across the condenser and aids in transferring heat from the working fluid as it passes through the condenser. In an air conditioning system for a vehicle, heat is transferred from the working fluid to the environment.

From the condenser the liquefied working fluid is returned to the inlet 16 of the expansion valve, after first passing through a receiver-drier 88. Receiver-drier 88 serves to remove impurities. Such receiver-driers are well known to those skilled in the art.

The proportional solenoid 22 is actuated by an electronic control module shown schematically as 96. Control module 96 includes a processor and operates to deliver signals to the solenoid to selectively control the flow rate of refrigerant through the expansion valve. The control module is further electrically connected to sensors (not shown) which detect the characteristics of the working fluid as it leaves the evaporator, and perhaps other characteristics of the system, and operator control, which enables the control module to calculate the appropriate amount of working fluid that should optimally pass through the expansion valve and to convert this amount into a signal. Those skilled in the art may devise numerous ways of sensing the parameters desired to be used to control the flow rate through the expansion valve and for the control module 96 to properly actuate the valve to provide the desired flow.

The embodiment of the valve shown in Figure 1 includes a normally closed control element 20. A normally open control element 98 is shown in Figures 4 and 5. Control element 98 is designed to be a direct replacement for control element 20, and element 98 may be substituted in expansion valve 10 without changes to the valve construction. However the actuation of the proportional solenoid by the control module would have to be changed to reflect the different character of the control element.

Control element 98 has a threaded lower portion 100 similar to threaded portion 32 of valve element 20. Also like the previously described control element, element 98 has a stem member 102 with an internal passage 104. Control element 98 also has an external hex area 106 for ease of installation and removal.

Control element 98 further includes a cylindrical outer surface 108. A pair of openings 110 in surface 108 are connected through ducts 112 to internal passage 104. Openings 110 are elongated longitudinally along the axis of the stem member as shown.

Control element 98 also includes a movable member 114. Movable member 114 has a cylindrical inner surface 116 slightly larger in diameter than outer surface 108. This enables the movable member to move longitudinally on the outside of the stem member. The stem member 102 also includes a plurality of ridges 118 in the area above openings 110 as shown in Figure 5.

Movable member 114 further includes a downwardly tapered peripheral surface 120 which terminates at sharp edge 123 adjacent its lower end. Movable member 114 further includes a plunger engaging portion 124 for engaging plunger 24. A compression spring 126 biases the movable member in the upward direction as shown in Figures 4 and 5. Stem member 102 further includes a detent 128 for helping to center spring 126 in position.

In operation of an expansion valve that includes control element 98, full flow is achieved when movable member 114 is disposed in its fully upward position. This occurs when no power is delivered to the proportional solenoid and plunger 24 is disposed fully upward as shown in Figure 1.

As electrical power to the coil of the solenoid is increased, the plunger moves downward and the movable member 114 moves similarly against the force of spring 126. As the movable member partially covers openings 110, flow through the control element is reduced. The flow is controlled by selectively moving the movable member to cover the openings to achieve the desired flow rate.

Like control element 20, control element 98 is not materially influenced by forces generated by the flow of the refrigerant therethrough. This is because the taper of peripheral surface 120 and the sharp edge minimize the amount of surface area exposed to the fast moving fluid exiting from the stem. This is particularly important in the normally open configuration of the control element as fluid exiting through openings 110 will tend to have a velocity that is both upward and outward in the orientation of the control element shown in Figure 5. The taper of the peripheral surface, which is preferably a maximum of about 15 degrees, and the sharp edge which is preferably less than about 0.0127 cm, minimizes the forces imparted by fluid flow. This enables accurate and repeatable flow based on the position of the movable member by the proportional solenoid. Control element 98 is also preferably comprised of stainless steel or other relatively rigid wear resistant non-magnetic material for the reasons discussed in conjunction with the normally closed control element.

A further advantage of the construction of the control elements is that fluid may flow through the valve in either direction. This avoids the need to connect the valve with particular ports as the inlet and outlet. It is also useful in heat pump applications in which refrigerant flow is periodically reversed.

In the preferred construction of control elements 20 and 98, a pair of opposed fluid openings in the stem member are used. These openings are elongated to achieve control through a wide range of flow rates. The opposed nature of the openings also serves to balance the forces on the movable member of the control element which facilitates accurate control.

Other numbers of openings and other configurations of openings may be used depending on the range of flow rates desired.

It will be understood by those skilled in the art that although the proportional solenoid 22 of the present invention is described for use with control elements such as control elements 20 and 98, the proportional solenoid may also be used to control other types of flow control elements.

## Claims

1. A proportional solenoid comprising: a non-magnetic isolation member (62) having a closed first end (64) and an open second end (66); a magnetic plunger (24) disposed in the isolation member (62), the plunger (24) being longitudinally movable within the isolation member between said first and second ends (64,66); a magnetic frame means (78) that supports a coil (76) connectable to an electrical supply; the frame means (78) supporting the coil (76) on a magnetic sleeve (80); the frame means (78) having an opening at one end to receive the isolation member (62) so that the frame means (78) and the coil (76) can be removed from the isolation member (62) and the plunger (24); flux saturation means (82) disposed longitudinally between one end of the plunger (24) and one end of the sleeve (80) to provide an area of magnetic flux saturation through the plunger (24); and a variable permeance element (69) disposed adjacent the flux saturation means (82) and axially adjacent said one end of the plunger; the variable permeance element (69) and the plunger (24) coacting to produce an area of variable permeance in relation to the position of the plunger (24) within the isolation member (62).

2. A proportional solenoid according to claim 1, wherein the variable permeance element comprises a flux washer (69) disposed adjacent the frame means (78) at said opening.

3. A proportional solenoid according to claim 1, wherein the flux saturation means comprises a longitudinal air gap (82) between said one end of the sleeve and the frame means one end.

4. A proprotional solenoid according to claim 1, wherein the plunger (24) comprises a number of rollable bodies (74) in contact with the isolation member (62) to provide low friction movement of the plunger (24) within the isolation member (62).

5. A proportional soldnoid according to claim 1, wherein said isolation member extends longitudinally from a second end of said frame means opposite said one end of the frame means through said opening to a length at least past said variable permeance element.

6. A proportional soldnoid according to claim 1, wherein said variable permeance element secures said open end of the isolation member to a valve body so that said plunger can engage a valve control element.

7. A proportional soldnoid having a magnetic plunger (24) that longitudinally moves by force of a magnetic field produced by an electromagnetic coil (76,78,80) so that the plunger (24) moves in a direction of increasing permeance in relation to current in the coil, including a non-magnetic sleeve (62) that surrounds the plunger (24) to provide a separation between the plunger (24) and magnetic elements of teh coil (76,78,80).

8. A proportional soldnoid according to claim 7, wherein the coil is energized by a DC current supply.

9. A proportional soldnoid comprising: a non-magnetic isolation member (62) having a closed first end (64) and an open second end (66); a magnetic plunger (24) disposed in the isolation member (62), the plunger (24) being longitudinally movable within the isolation member (62) between said first and second ends (64,66); a magnetic frame (78) that supports a coil (76) connectable to an electrical supply; the frame (78) supporting the coil (76) on a magnetic sleeve (80); the frame (78) having an opening at one end thereof to receive the isolation member (62) through said opening so that the frame (78) and the coil (76) can be removed from the isolation member (62) and the plunger (24); a flux saturation element (82) disposed longitudinally between one end of teh plunger (24) and one end of the sleeve (62) to provide an area of magnetic flux saturation through the plunger (24); and a variable permeance element (69) disposed adjacent the flux saturation element (82) and axially adjacent said one end of the plunger (24); the variable permeance element (69) and the plunger (24) coacting to produce an area of variable permeance in relation to the position of the plunger (24) within the isolation member (62).

10. A proportional solenoid according to claim 9, wherein the plunger (24) comprises rollable bodies (74) in contact with the isolation member (62), the isolation member (62) and the rollable bodies (74) cooperating to substantially reduce hysteresis in plunger movement in relation to current in the coil by reducing radial forces acting on the plunger.

11. A solenoid comprising:
an actuator member (24) comprised of magnetic material;
an isolation member (62) comprised of nonmagnetic material, the isolation member (62) having an interior area (72), the actuator (24) member being movable longitudinally in the interior area (72);
a sleeve member (80) comprised of magnetic material in surrounding relation to the isolation member (62), and terminating at a longitudinal edge surface;
a variable permeance element (69) longitudinally disposed from the edge surface of the sleeve member and including means for accepting the actuating member adjacent thereto in variable longitudinal position;
an electrical coil (76) in generally surrounding relation to the sleeve member and having a first end and a second end; and a frame comprised of magnetic material (78) supporting the coil, the frame extending adjacent the sleeve member at the first
coil end and adjacent the variable permeance element at the second coil end.

12. A solenoid according to claim 11, wherein said variable permeance element includes an opening, and wherein the actuating member is movable into said opening.

13. A solenoid according to claim 11, wherein the sleeve member is longitudinally movable on the isolation member.

14. A solenoid according to claim 12, wherein the isolation member and the interior area thereof extend longitudinally thorough said opening in said variable permeance element.

15. A solenoid according to claim 11, wherein said actuator member moves longitudinally in a direction of increasing permeance when current is conducted by said coil.

16. A solenoid according to claim 15, wherein said coil is energized with a current to operate the solenoid for proportional movement in relation to coil current magnitude.

17. A solenoid according to claim 15, wherein said actuator member, frame, variable permeance element and coil proivde a magnetic flux path for inducing movement of said actuator member without use of a magnetic pole piece.
